# NEUE EUROPÄISCHE PATENTSCHRIFT

(11) **EP 1 535 505 B2**
(45) Veröffentlichungstag und Bekanntmachung des Hinweises auf die Entscheidung über den Einspruch: **07.12.2011**
(45) Hinweis auf die Patenterteilung: 12.03.2008
(21) Anmeldenummer: 05100862.1
(22) Anmeldetag: 27.07.2001
(51) Int. Cl.: A01D 45/02

(54) **Maschine zum Mähen von stängelartigem Erntegut**
Machine for mowing stalk crops
Machine pour faucher des plantes à tiges

(30) Priorität: 01.08.2000 DE 10037534
(43) Veröffentlichungstag der Anmeldung: 01.06.2005
(62) Teilanmeldung aus: 01118332.4
(73) Patentinhaber: Maschinenfabrik Kemper GmbH & Co. KG, 48703 Stadtlohn (DE)
(72) Erfinder: Wübbels, Richard, 48703, Rhede (DE); Wolters, Norbert, 48712, Gescher (DE)
(74) Vertreter: Holst, Sönke

(56) Entgegenhaltungen:
- EP-A- 0 069 898
- EP-A1- 0 504 639
- EP-A1- 0 750 833
- EP-A1- 1 177 718
- DE-A1- 2 621 716
- DE-A1- 19 531 918
- DE-U- 29 820 638
- US-A- 3 331 196
- US-A- 4 137 695
- Prospekt "Claas der Erntespezialist" Jaguar 690,685,680,675
- Prospekt "Claas RU 450"
- Prospekt "Krone Mais Chopper MC 16B beim Einsatz im Parallelverfahren"

## Beschreibung

Die Erfindung betrifft eine Maschine zum Mähen von stängelartigem Erntegut nach dem Oberbegriff des Anspruchs 1.

In der EP 0 069 898 A ist eine mehrreihige Erntemaschine, insbesondere für Mais, beschrieben, bei der zwei Schneid- und Aufnahmetrommeln mit darunter angeordneten Schneideinrichtungen seitlich nebeneinander angeordnet sind, die auf einem Feld stehendes Gut abschneiden und es Einzugswalzen aufgeben, die das abgeschnittene Gut einer Häckseleinrichtung zuführen. Um das Gut aus den Aufnahmetrommeln zu entfernen und den Einzugswalzen aufzugeben, sind vor der Mitte des von den Einzugswalzen gebildeten Einzugskanals angeordnete Abstreifer vorgesehen. Die freien Enden der Abstreifer bilden einen vertikalen Spalt, zwischen dem ein Führungsteil vorgesehen ist, das aus dem Spalt zwischen den freien Enden der Abstreifer nach oben herausragt.

Die DE 195 27 607 A schlägt eine Mähvorrichtung für stängeliges Erntegut vor, die mehrere nebeneinander angebrachte Mähscheiben mit darüber angeordneten Förderscheiben aufweist. Das abgeerntete Gut wird durch Ausräumerscheiben aus den Förderscheiben entnommen und in einem Einzugskanal angeordneten Einzugswalzen zugeführt, die es einer Häckseleinrichtung aufgeben. Die Ausräumerscheiben der zwei mittleren Förderscheiben sind unmittelbar vor dem Einzugskanal angeordnet. Oberhalb dieser Ausräumerscheiben ist eine quer zur Fahrtrichtung verlaufende Kante vorgesehen, die von der Rückseite der mittleren Teilerspitze gebildet wird, und verhindert, dass Halmgutstängel von den inneren Ausräumerscheiben nach vorn durchgezogen werden.

Bei bekannten Maschinen zum Mähen von stängelartigem Erntegut (DE 195 31 918 A), die mehrere seitlich nebeneinander angeordnete Mäh- und Einzugstrommeln aufweisen, wird das von äußeren Mäh- und Einzugstrommeln abgeerntete Gut zunächst an der Rückseite der Maschine in einem Querförderkanal seitlich transportiert und dann in den Einzugskanal eingeführt, also um 90° entgegen der Fahrtrichtung nach hinten abgelenkt.

Die EP 0 504 639 A beschreibt eine andere Maschine zum Ernten von Mais, die mehrere seitlich nebeneinander angeordnete Mäh- und Einzugseinrichtungen aufweist, die aus unteren Schneidscheiben und darüber angeordneten Förderscheiben bestehen. An den Rückseiten der Mäh- und Einzugseinrichtungen wird das Erntegut durch eine Querförderschnecke zur Mitte der Maschine gefördert. Die mittleren Mäh- und Einzugseinrichtungen drehen sich nach innen und umfassen einen kegelstumpfförmigen Grundkörper, der außer den Förderscheiben glatt ist. Die äußeren Mäh- und Einzugseinrichtungen drehen sich nach außen und umfassen mit Mitnehmern ausgestattete Walzen mit vertikalen Drehachsen, die an der Oberseite des kegelstumpfförmigen Grundkörpers angeordnet sind.

Es kommt gelegentlich vor, dass bei der Ernte - beispielsweise von Silomais - am Rand eines Feldes nur ein oder zwei Pflanzenreihen stehen bleiben. Diese Pflanzenreihen können nur mit den äußeren Mäh- und Einzugstrommeln der Maschine geschnitten und eingezogen werden. Bei einer sehr breiten Maschine (z. B. einer 8 oder 10 Pflanzenreihen erfassenden Ausführungsform) müssen die Pflanzen über einen längeren Weg durch den Querförderkanal zur Mitte der Maschine transportiert werden. Da an den mittleren Mäh- und Einzugstrommeln keine weiteren Pflanzen einlaufen, werden die geschnittenen Pflanzen nicht durch in den Querförderkanal eintretendes Material im Querförderkanal gehalten, sondern liegen relativ lose darin. Durch einen hohen Schwerpunkt bedingt, können sich die Pflanzen beim Transport im Querförderkanal immer weiter nach unten neigen und rutschen dann mit ihren unteren Enden aus dem Querförderkanal heraus. Seitlich vor dem Einzugskanal sind Schrägfördertrommeln mit etwa vertikalen Drehachsen angeordnet, deren Aufgabe darin besteht, die Pflanzen in den Einzugskanal zu fördern. Die Schrägfördertrommeln sind aber nicht in der Lage, die mit den unteren Enden aus dem Querförderkanal herausragenden Pflanzen zu erfassen. Die Pflanzen legen sich quer vor die Querfördertrommeln und blockieren dann den weiteren Gutfluss. Durch eine Verengung des Querförderkanals könnte man den Klemmeffekt zwar verbessern, man wird aber im normalen Betrieb, d. h. wenn über die gesamte Breite der Maschine Pflanzen einlaufen, Durchsatzprobleme bekommen.

Das aus der EP 0 069 898 A bekannte Führungsteil und die oberhalb der mittleren Abstreifer angeordnete Kante der DE 195 27 607 A können das Problem ebenfalls nicht lösen, auch nicht die außer den Förderscheiben glatten Mäh- und Einzugseinrichtungen der EP 0 504 639, die das Erntegut zudem vom Einzugskanal hinfort fördern würden.

Das der Erfindung zu Grunde liegende Problem wird darin gesehen, die Gutförderung in einer Maschinen zum Mähen von stängelartigem Erntegut zu verbessern, insbesondere wenn nur ein Teil der Mäh- und Einzugstrommeln mit Pflanzenmaterial beaufschlagt wird.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es sind zwei Einzugs- und Mäheinrichtungen nebeneinander vor dem Einzugskanal angeordnet, über denen jeweils eine Fördereinrichtung angebracht ist. Denkbar wäre es auch, eine oder mehrere Fördereinrichtungen weiter außen am Querförderkanal anzubringen. Die Fördereinrichtungen werden rotativ angetrieben, durch einen mit den Einzugs- und Mäheinrichtungen permanent gekoppelten Antrieb. Dazu kann die Fördereinrichtung über eine Welle und ein Getriebe mit einer ihr benachbarten Einzugs- und Mäheinrichtung verbunden sein, die durch einen Antrieb ebenfalls in Drehung versetzbar ist.

Wird der Antrieb der Maschine im Falle eines Erntegutstaus reversiert, wird automatisch auch die Fördereinrichtung reversiert, so dass sie das Entfernen gestauten Materials aus dem Einzugskanal unterstützen kann. Die Fördereinrichtung ist von besonderem Vorteil, da das aus dem Einzugskanal beim Reversieren heraus geförderte Erntegut im Anschluss an das Reversieren auch wieder in den Einzugskanal hineingefördert wird. Im Stand der Technik hat man ohne das zusätzliche Förderelement große Schwierigkeiten, das oberhalb einer auch als Mitteltisch bezeichneten Platte, die über den mittleren zwei Einzugs- und Mäheinrichtungen angeordnet ist, beim Reversieren abgelegte Erntegutpaket wieder einzuziehen. Da das erfindungsgemäße Förderelement genau dort positioniert ist, wo das Erntegutpaket abgelegt wurde, kommt seine Förderwirkung sehr gut zur Wirkung, ohne dass sich unnötige Reibungsverluste ergeben.

Die Fördereinrichtung umfasst eine sternförmige, mit überstehenden Mitnehmern ausgestattete Förderscheibe und/oder eine mit derartigen Mitnehmern ausgestattete Förderwalze. In beiden Fällen können die Mitnehmer starr an der Förderscheibe oder Förderwalze angebracht sein, obwohl auch gesteuerte Mitnehmer denkbar sind. Die Mitnehmer können somit in Abhängigkeit von ihrer jeweiligen Winkelposition mehr oder weniger weit nach außen von der Förderscheibe bzw. Förderwalze überstehen, wie Finger an Schneckenförderern von Schneidwerken, und/oder verschwenkt werden, wie die Zinken einer Haspel eines Schneidwerks.

Die Fördereinrichtungen sind betreibbar, gegebenenfalls oberhalb der Einzugs- und Mäheinrichtungen zum Liegen kommendes Erntegut von der Oberseite der Einzugs- und Mäheinrichtungen abzufördern. Auf diese Weise erhält man eine Maschine zum Mähen von stängelartigem Erntegut, die sich durch hohe Betriebssicherheit auszeichnet.

Die Förderscheibe oder Förderwalze ist um eine Drehachse antreibbar, die in der Regel horizontal und quer zur Vorwärtsfahrtrichtung verläuft, um das aus dem Querförderkanal ausgetretene Erntegut in den Querförderkanal zu fördern. Es können mehrere Förderscheiben bzw. Förderwalzen in Vorwärtsfahrtrichtung hintereinander angeordnet werden, wobei auch eine Mischform, d. h. eine Förderwalze stromab einer Förderscheibe oder umgekehrt, denkbar ist.

Die antreibbaren Fördereinrichtungen sind demnach oberhalb des Querförderkanals und in Vorwärtsfahrtrichtung vor dem Querförderkanal angeordnet. Die Fördereinrichtung sitzt dem Einzugskanal gegenüber und ist eingerichtet, einen Stau zu beseitigen, der durch eventuell aus dem Querförderkanal ausgetretenes Erntegut bedingt sein kann. Durch die Fördereinrichtung kann das gestaute Erntegut auf die sich im Querförderkanal befindlichen Pflanzen geschoben werden, die das gestaute Erntegut mitreißen und in den Einzugskanal mitnehmen. Der Stau wird auf diese Weise selbsttätig und unproblematisch beseitigt. Es ist auch denkbar, dass die Fördereinrichtung das Erntegut in den Querförderkanal zurück befördert, von wo es in der Weise in den Einzugskanal gefördert wird, auf die auch das im Querförderkanal verbliebene Erntegut in den Einzugskanal gelangt. Möglich wäre auch, dass sie das Erntegut direkt in den Einzugskanal fördert, oder es am Eingang des Einzugskanals angeordneten Umlenkeinrichtungen zuführt, die das im Querförderkanal geförderte Erntegut nach hinten in den Einzugskanal umlenken. Alternativ oder zusätzlich wäre eine hinter dem Querförderkanal angeordnete Fördereinrichtung zur Beseitigung eines Staus denkbar.

Insbesondere bietet sich an, die Fördereinrichtung auf einer Platte anzuordnen, die über einer oder mehreren, vor dem Einzugskanal angeordneten Einzugs- und Mäheinrichtungen angebracht ist. Diese Platten werden auch als Mitteltisch bezeichnet.

Schließlich sind beidseits des Eingangs des Einzugskanals Umlenkeinrichtungen vorgesehen, um das im Querförderkanal geförderte Erntegut nach hinten, in den Einzugskanal hinein, umzulenken. Dafür werden drehbare, angetriebene Schrägfördertrommeln mit etwa vertikalen, bzw. leicht nach vorn geneigten Drehachsen verwendet, wie sie an sich aus der EP 0 508 189 A bekannt sind.

In den Zeichnungen sind drei nachfolgend näher beschriebene Ausführungsbeispiele dargestellt, die nicht unter den Umfang des Anspruchs 1 fallen, weil in ihnen die Fördereinrichtung nicht oberhalb der mittleren Einzugs- und Mäheinrichtungen angeordnet ist, sondern zwischen ihnen. Es zeigt:
- Fig. 1: perspektivische Ansicht einer Maschine zum Mähen von stängelartigem Erntegut in schematischer Darstellung,
- Fig. 2: eine Ansicht einer anderen Maschine zum Mähen von stängelartigem Erntegut, und
- Fig. 3: eine Ansicht einer wiederum anderen Maschine zum Mähen von stängelartigem Erntegut.

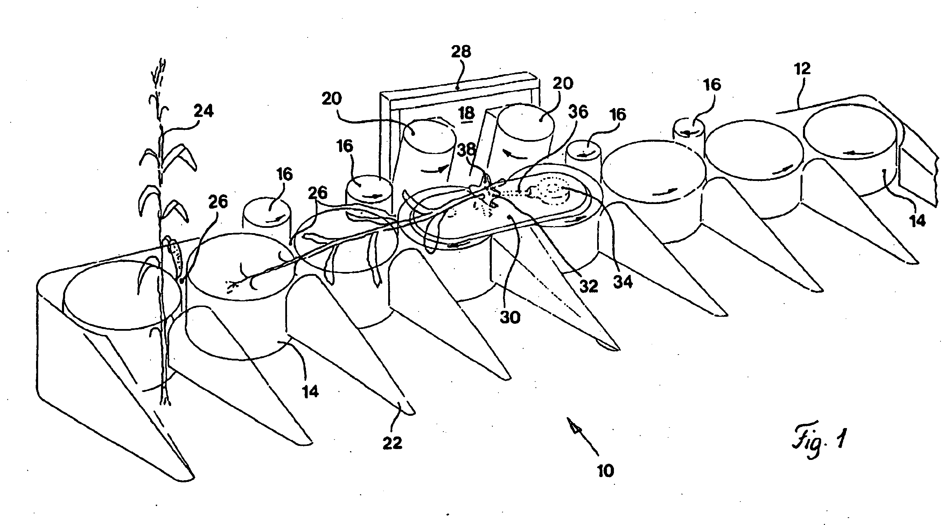

In Figur 1 ist eine Maschine 10 zum Mähen von stängelartigem Erntegut wiedergegeben. An einem schematisch dargestellten Rahmen 12 sind seitlich nebeneinander acht Einzugs- und Mäheinrichtungen 14 angebracht, die in an sich bekannter Weise aus koaxial über zugehörigen Mähscheiben angeordneten Förderscheiben mit einer Vielzahl von über den Umfang verteilten taschenförmigen Aussparungen bestehen. Die Förderscheiben erfassen und transportieren das stängelartige Erntegut, das mittels der Mähscheiben vom Boden des Feldes abgeschnitten wird. Die Anzahl der Einzugs- und Fördereinrichtungen 14 der Maschine 10 ist beliebig, es können also mehr oder weniger als die in Figur 1 dargestellten acht Einzugs- und Fördereinrichtungen 14 Verwendung finden. An der Rückseite der Einzugs- und Mäheinrichtungen 14 wird das Erntegut durch (in den Zeichnungen aus Gründen der Übersichtlichkeit nicht dargestellte) Ausräumer, die als rotierende Scheiben oder feststehende Elemente ausgeführt sein können, aus den Förderscheiben entnommen, und durch mit den Einzugs- und Mäheinrichtungen 14 zusammenwirkende Querfördertrommeln 16, die mit abstehenden Mitnehmerzähnen versehen sind, die entsprechende Schlitze in der Rückwand der Maschine 10 durchdringen, in seitlicher Richtung zur Mitte der Maschine 10 gefördert.

An der Rückseite der Mitte der Maschine 10 ist der Einzugskanal 18 eines Feldhäckslers angeordnet. Das Erntegut wird in der Mitte der Maschine 10 durch beidseits in Vorwärtsfahrtrichtung vor dem Einzugskanal 18 angeordnete Schrägfördertrommeln 20, die ebenfalls mit Mitnehmerzähnen versehen sind, in den Einzugskanal 18 gefördert. Die Drehachsen der Schrägfördertrommeln 20 sind nach vorn geneigt. Die Einzugs- und Mäheinrichtungen 14 werden um etwa vertikale, bzw. leicht nach vorn geneigte Drehachsen angetrieben. Auch die Querfördertrommeln 16 und die Schrägfördertrommeln 20 werden in Drehung versetzt. Der entsprechende Antrieb erfolgt durch eine selbstfahrende Erntemaschine, in der Regel einen Feldhäcksler, dessen Einzugskanal 18 rückseitig an der Mitte der Maschine angeordnet ist, und die die Maschine in Vorwärtsfahrtrichtung über ein Feld bewegt. Die Maschine 10 ist durch einen Trägerrahmen 28 lösbar an der selbstfahrenden Erntemaschine befestigt. Die Drehrichtungen der Einzugs- und Mäheinrichtungen 14 sind beidseits der Längsmittelebene der Maschine 10 gegensinnig gerichtet, wobei sich die jeweils inneren drei Einzugs- und Mäheinrichtungen 14 gegensinnig zu den jeweils ganz außen angeordneten Einzugs- und Mäheinrichtungen 14 drehen.

Wird die Maschine 10 über ein Feld bewegt, werden die dort stehenden Pflanzen 24 ggf. durch Stängelteiler 22 seitlich zur Seite gedrückt, und von den reihenunabhängig wirkenden Einzugs- und Mäheinrichtungen 14 erfasst und vom Boden abgetrennt. Die Pflanzen 24 werden dann quer zur Vorwärtsfahrtrichtung im Querförderkanal 26, der zwischen der Rückwand der Maschine 10 und den Querfördertrommeln 16 einerseits und den Einzugs- und Mäheinrichtungen 14 andererseits definiert ist, zur Mitte der Maschine 10 transportiert. Dort werden sie durch die Schrägfördertrommeln 20 in den Einzugskanal 18 gefördert.

Anzumerken ist, dass die Ausgestaltung des Querförderkanals 26 beliebig ist. Es kann sich wie in den Figuren 1 - 3 um einen zwischen der Rückwand der Maschine 10 und den davor angeordneten Einzugs- und Mäheinrichtungen 14 gebildeten Kanal handeln, durch den das Gut durch die Einzugs- und Mäheinrichtung 14 im Zusammenwirken mit dahinter angeordneten Querfördertrommeln 16 oder mit angetriebenen Ausräumerscheiben oder Querfördergurten transportiert wird (DE 195 27 607 A, DE 195 31 918 A und DE 198 56 444 A). Auch ein von den Einzugs- und Mäheinrichtungen 14 unabhängiger Transport des Ernteguts im Querförderkanal 26 ist denkbar, der durch separate Förderer beispielsweise in Form von Fördergurten oder Förderschnecken (GB 2 012 154 A) bewerkstelligt werden kann.

Insbesondere, falls nur eine äußere Einzugs- und Mäheinrichtung 14 mit Erntegut beaufschlagt wird, ist es denkbar, dass einzelne Pflanzen wegen fehlender Gutzufuhr von den anderen Einzugs- und Mäheinrichtungen 14 nicht sicher im Querförderkanal 26 festgehalten werden können. Diese Pflanzen 24 können, wie die in Figur 1 mit dem Bezugszeichen 24' gekennzeichnete Pflanze, wegen ihres relativ hohen Schwerpunkts umfallen und mit ihrem unteren Ende aus dem Querförderkanal 26 heraus gelangen. In einem derartigen Fall ist es möglich, dass die Pflanze auf dem zwischen den zwei mittleren Einzugs- und Mäheinrichtungen 14 angeordneten, plattenförmigen Mitteltisch 30 zu liegen kommt. Bei bekannten Maschinen 10 zum Mähen stängelartigen Ernteguts muss der Fahrer den Motor des Feldhäckslers abstellen, aus der Bedienerkabine heraussteigen und die Pflanze 24' manuell vom Mitteltisch 30 entfernen.

Um diesen Nachteil zu vermeiden, ist an der Mitte der Oberseite des Mitteltischs 30 eine Fördereinrichtung 32 in Form einer mit Mitnehmern 38 versehenen, sternförmigen Förderscheibe angeordnet, die in einer vertikalen und parallel zur Vorwärtsfahrtrichtung orientierten Ebene liegt. Die Fördereinrichtung 32 durchdringt eine Öffnung im Mitteltisch 30. Sie ist durch eine Welle 36 und ein Getriebe 34 antriebsmäßig mit einer Einzugs- und Mäheinrichtung 14 verbunden. Sie wird um eine horizontale, quer zur Vorwärtsfahrtrichtung der Maschine 10 verlaufende Drehachse angetrieben, wobei die Welle 36 und die Drehachse der Fördereinrichtung 32 unterhalb des Mitteltischs 30 liegen. Die Fördereinrichtung 32 fördert Pflanzen 24', die aus dem Querförderkanal 26 herausgelangt sind, selbsttätig wieder in den Querförderkanal 26 hinein, da ihre Oberseite sich im normalen Erntebetrieb in Richtung auf den Einzugskanal 18 zu dreht. Dort werden die Pflanzen durch die Schrägfördertrommeln 20 in den Einzugskanal 18 gefördert.

Durch die antriebsmäßige Kopplung der Fördereinrichtung 32 mit den Einzugs- und Mäheinrichtungen 14 wird die Fördereinrichtung 32 im Reversierbetrieb der Maschine 10 in umgekehrter Drehrichtung angetrieben. Sie unterstützt das Ablegen beim Reversieren aus dem Einzugskanal 18 ausgeworfenen Ernteguts auf dem Mitteltisch 30. Wird nach dem Reversieren der normale Erntebetrieb wieder aufgenommen, fördert sie das auf dem Mitteltisch 30 abgelegte Erntegut wieder in den Querförderkanal 26 hinein, von dem aus sie in den Einzugskanal 18 gelangen.

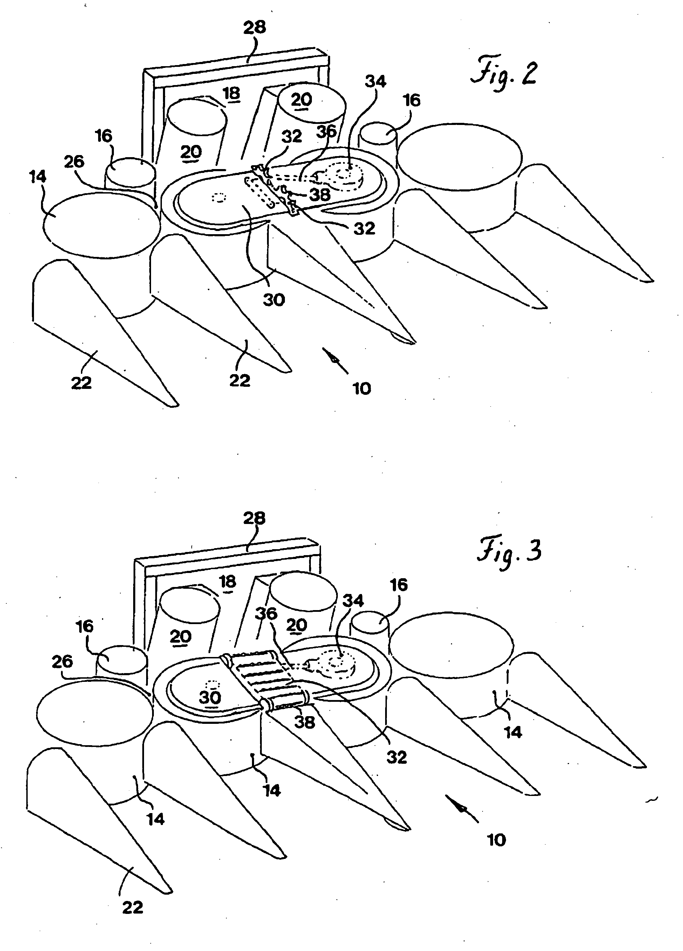

Bei der in Figur 2 dargestellten Ausführungsform einer Maschine 10 zum Mähen von stängelartigem Erntegut, von der nur die mittleren vier Einzugs- und Mäheinrichtungen 14 dargestellt sind, finden zwei auf dem Mitteltisch 30 in Vorwärtsfahrtrichtung hintereinander angeordnete Fördereinrichtungen 32 mit parallelen Drehachsen Verwendung. Die beiden Fördereinrichtungen 32 werden gleichsinnig angetrieben und ermöglichen über die gesamte Länge des Mitteltischs 30, dort zum liegen kommende Pflanzen in den Querförderkanal 26 zurück und von dort in den Einzugskanal 18 zu fördern. Im übrigen Aufbau ist die Maschine 10 mit der in Figur 1 gezeigten identisch, wobei einander entsprechende Elemente mit übereinstimmenden Bezugszeichen gekennzeichnet sind.

In Figur 3 ist eine dritte Ausführungsform einer Maschine 10 zum Mähen von stängelartigem Erntegut dargestellt. Sie ist mit einer Fördereinrichtung 32 in Form eines Fördergurts mit Mitnehmern 38 ausgestattet. Der in der Mitte des Mitteltischs 30 angeordnete, sich in Vorwärtsfahrtrichtung erstreckende Fördergurt wird von einer Einzugs- und Mäheinrichtung 14 durch das Getriebe 34 und die Welle 36 derart angetrieben, dass sich seine oberhalb des Mitteltischs 30 angeordnete Oberseite während des normalen Erntebetriebs in Richtung auf den Einzugskanal 18 zu bewegt. Eventuell aus dem Querförderkanal 26 ausgetretene Pflanzen werden auf diese Weise selbsttätig wieder in den Querförderkanal 26 hineingefördert und gelangen von dort in den Einzugskanal 18. Ansonsten entspricht die Maschine 10 in Figur 3 den in den Figuren 1 und 2 dargestellten Maschinen.

## Patentansprüche

1. Maschine (10) zum Mähen von stängelartigem Erntegut, mit mehreren Einzugs- und Mäheinrichtungen (14) zum Abschneiden und Fördern des Ernteguts, die aus über zugehörigen Mähscheiben angeordneten Förderscheiben mit einer Vielzahl von über den Umfang verteilten, taschenförmigen Aussparungen zum Erfassen und Transportieren des Ernteguts bestehen und seitlich nebeneinander vor einem Einzugskanal (18) angeordnet sind, durch den das Erntegut einer Häckseleinrichtung aufgebbar ist, wobei an beiden Seiten des Einzugskanals (18) jeweils mehrere Einzugs- und Mäheinrichtungen (14) angeordnet sind, an deren Rückseiten ein Querförderkanal (26) vorgesehen ist, durch den das abgeschnittene Erntegut quer zur Vorwärtsfahrtrichtung transportierbar ist, am stromab liegenden Ende des Querförderkanals (26) der Einzugskanal (18) angeordnet ist, und beidseits des Eingangs des Einzugskanals (18) drehbare, angetriebene Schrägfördertrommeln (20) mit etwa vertikalen oder leicht nach vorn geneigten Drehachsen vorgesehen sind, um das im Querförderkanal (26) geförderte Erntegut nach hinten in den Einzugskanal (18) umzulenken, **dadurch gekennzeichnet, dass** über den beiden seitlich nebeneinander vor dem Einzugskanal (18) angeordneten Einzugs- und Mäheinrichtungen (14) jeweils eine rotativ antreibbare, separate Fördereinrichtung (32) angebracht ist, die antriebsmäßig permanent mit einer benachbarten Einzugs- und Mäheinrichtung (14) verbunden ist und eine oder mehrere, mit Mitnehmern (38) ausgestattete Förderscheiben und/oder Förderwalzen umfasst, die sich im Erntebetrieb in Richtung auf den Einzugskanal (18) zu drehen.

2. Maschine (10) nach Anspruch 1, **dadurch gekennzeichnet, dass** die Förderscheiben und/oder Förderwalzen um eine horizontale und quer zur Vorwärtsfahrtrichtung verlaufende Achse drehbar sind.

3. Maschine (10) nach Anspruch 1 oder 2, **dadurch gekennzeichnet, dass** wenigstens zwei Förderscheiben und/oder Förderwalzen in Vorwärtsfahrtrichtung hintereinander angeordnet sind.

## Claims

1. A machine (10) for mowing stalk-like crop, comprising a plurality of gathering and mowing devices (14) for cutting off and conveying the crop, which devices consist of conveying discs, disposed over associated cutting discs, having a multiplicity of pocket-shaped cavities distributed over the periphery for the seizure and transportation of the crop and are disposed side by side in front of a feed duct (18) through which the crop can be delivered to a chopping device, wherein on both sides of the feed duct (18) a plurality of gathering and mowing devices (14) are located, respectively, on the rear side of which a transverse feeding channel (26) is provided through which the cut crop can be transported transversely to the forward direction, at the downstream end of the transverse feeding channel (26) the feed duct (18) is located and on both sides of the inlet of the feed duct (18) rotatable, driven oblique feeding drums (20) having a rotating axis approximately vertical or angled towards the front in order to deflect the crop fed in the transverse feeding channel (26) to the rear into the feed duct (18), **characterized in that** over the two gathering and mowing devices (14) provided laterally besides the feed duct (18) there is respectively fitted a rotary driveable, separate conveying device (32), which is permanently drive-connected to an adjacent gathering and mowing device (14) and comprises one or more conveying discs and/or conveying rollers which are equipped facing the harvested crop with drivers (38) and which rotate during harvesting operation in the direction of the feed duct (18).

2. A machine (10) according to Claim 1, **characterized in that** the conveying discs and/or conveying rollers are rotatable about a horizontal axis running transversely to the direction of forward travel.

3. A machine (10) according to Claim 1 or 2, **characterized in that** at least two conveying discs and/or conveying rollers are disposed one behind the other in the direction of forward travel.

## Revendications

1. Machine (10) pour couper des végétaux à tiges, comportant plusieurs dispositifs d'introduction et de coupe (14) destinés à couper et à transporter les végétaux, lesquels sont formés par des disques de transport, agencés au-dessus des disques de coupe associés et munis d'une pluralité d'évidements en forme de poche, répartis sur tout le pourtour et destinés à saisir et transporter les végétaux, et lesquels sont agencés latéralement les uns à côté des autres en amont d'un conduit d'admission (18), par lequel les végétaux récoltés peuvent être amenés dans un dispositif de hachage, à sur les deux cotes du conduit d'admission (18) sont montés respectivement plusieurs dispositifs d'introduction et de coupe (14) sur leur derrière est monté un conduit de transport transverse (26) par que le végétaux coupés peuvent être transportés transverse à la direction avant, au fin du conduit de transport transverse (26) le conduit d'admission (18) est monté, et au les deux cotes de l'entrée du conduit d'admission (18) des tambours (20) du transport inclinés sont montés avec les axes du rotation approximativement verticale ou incliné à l'avant pour dévier les végétaux vers l'arrière dans le conduit d'admission (18), **caractérisée en ce qu'**au-dessus des deux dispositifs d'introduction et de coupe (14) montés latéralement l'un à côte de l'autre avant le conduit d'admission (18) est agencé respectivement un dispositif de transport (32) séparé, qui peut être entraîné en rotation et qui est en liaison d'entraînement permanente avec un dispositif d'introduction et de coupe (14) adjacent, et comporte un ou plusieurs disques de transport et/ou cylindres de transport, et se tournent au cours de la récolte vers le conduit d'admission (18)

2. Machine (10) selon la revendication 1, **caractérisée en ce que** les disques de transport et/ou les cylindres de transport sont aptes à tourner autour d'un axe horizontal et orienté transversalement à la direction d'avancement.

3. Machine (10) selon la revendication 1 ou 2, **caractérisée en ce qu'**au moins deux disques de transport et/ou cylindres de transport sont agencés l'un derrière l'autre dans la direction d'avancement.
